# EUROPEAN PATENT APPLICATION

(11) **EP 1 130 662 A1**
(43) Date of publication of application: **05.09.2001**
(21) Application number: 00951952.1
(22) Date of filing: 11.08.2000
(51) Int. Cl.: H01M 4/02

(54) **ELECTRODE STRUCTURE, ELECTRIC COMPONENT AND PRODUCTION METHODS**

(30) Priority: 12.08.1999 JP 26250299
(71) Applicant: Nisshinbo Industries, Inc., Chuo-ku, Tokyo 103-8650 (JP); ITOCHU CORPORATION, Minato-ku, Tokyo 107-8077 (JP)
(72) Inventor: SATO, Takaya, Nisshinbo Ind., Inc. Res. & Dev. Ctr, Midori-ku, Chiba-shi, Chiba 267-0056 (JP); SHIMIZU, Tatsuo CI Techno-Sales Inc., Chiyoda-ku, Tokyo 102-0094 (JP)
(74) Representative: Sajda, Wolf E., Dipl.-Phys.
(86) International application number: JP0005396
(87) International publication number: WO0113444

(57) **Abstract**

An electrode structure 1 comprising a powdered active electrode substance 11 coated by an ion-conducting polymer 12 which is made to adhere to a current-collecting member 13, a secondary cell employing this structure and a method of manufacturing this structure are proposed to provide an electrode, secondary cell, or electric double layer capacitor with a high degree of safety, or a secondary cell or electric double layer capacitor which does not use an electrolyte.

## Description

### Field of the Invention

This invention relates to an electrode structure using an ion-conducting polymer, and to an electrical component such as a primary cell, a secondary cell, and an electric double layer capacitor.

### Background of the Invention

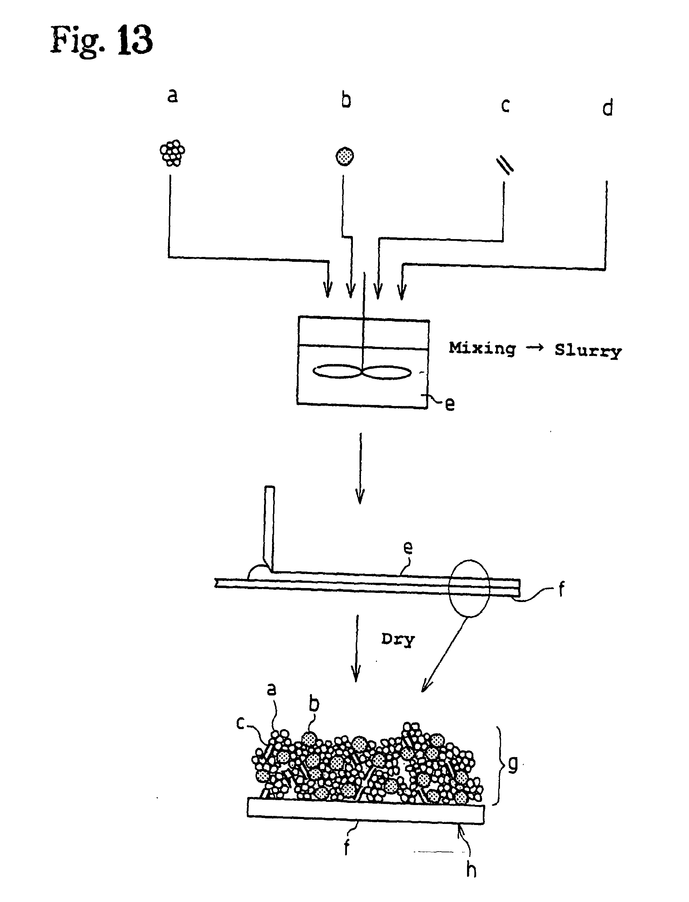

In the prior art, in a lithium ion battery, a positive electrode h is manufactured by mixing a mixture e of a powdered electrode active substance a comprising LiCoO₂, powdered electrically-conducting carbon b, a binder polymer c and a solvent d into a slurry, and applying it to a current-collecting member f to form a compound film g, as shown in Fig. 13. The compound film g of Fig. 13 is a partial enlargement of the mixture e on the current-collecting member f.

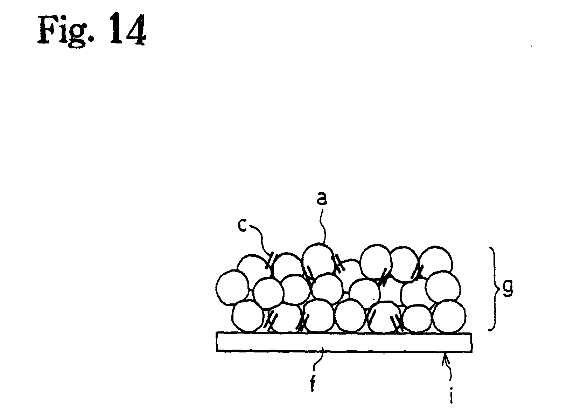

A negative electrode i is manufactured by mixing the mixture e of the powdered electrode active substance a comprising powdered graphite, the binder polymer c and the solvent d into a slurry, applying it to the current-collecting member f, and drying to form the compound film g, as shown in Fig. 14.

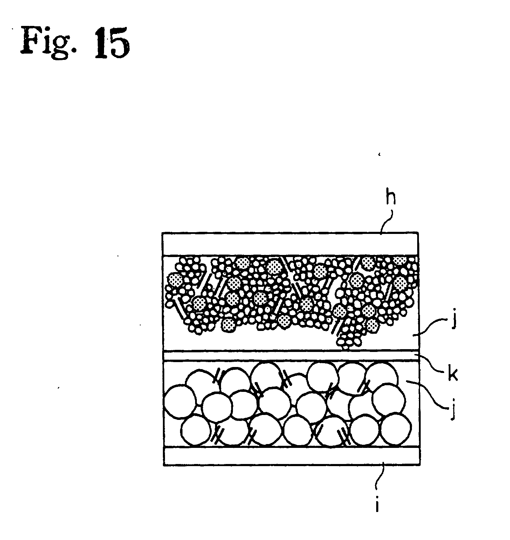

A lithium secondary cell contains an electrolyte j between the positive electrode h and negative electrode i, a separator k being disposed in the electrolyte j, as shown in Fig. 15.

The lithium secondary cell is generally formed by applying a dispersion of the electrode active substance a or the binder c in an organic solvent to a current-collecting member f comprising metal foil or the like, drying, winding a sheet electrode comprising the compound film g into a spiral shape together with the separator k, inserting this spiral-shaped electrode into a battery case, filling with the organic solvent electrolyte j, and sealing. This battery is characterized by having a high energy density per unit capacity and high energy density per unit weight.

However, concerning the electrode active substance a contained in the compound film g, doping/undoping of lithium ions is performed during charging and discharging through the electrolyte j which permeated the voids in the compound film j, and if the particles of the electrode active substance a are covered by the binder polymer c, lithium ions are prevented from penetrating the electrode active substance a, so battery performance declines.

Specifically, this is because the binder polymer c which is generally used does not have ion-conducting properties. The binder polymer c may be vinylidene polyfluoride, a fluoride resin such as polytetrafluoroethylene-hexafluoropropylene copolymer, styrene-butadiene rubber latex or carboxyl-modified styrene-butadiene rubber latex.

Even if there are minute interstices on the surfaces of the electrode active substance particles a covered by the binder polymer c, the electrolyte j cannot penetrate them, so passage of lithium ions is blocked and the battery characteristics decline.

If the amount of the added binder polymer c is reduced in an attempt to increase the interstices on the particle surfaces of the electrode active substance a, the strength of the compound film g decreases, so cohesion between the electrode active substance a or electron-conducting assistant and the current-collecting member f gradually declines during repeated charges and discharges of the battery, and battery performance declines due to decrease of electron-conducting properties.

As a means of resolving this problem, Japanese Patent Laid-Open Hei 10-106540 discloses a method of forming the binder polymer c as a mesh. However, even if the electrode active substance a is made to adhere in a mesh-like fashion by the binder polymer c, the binder polymer c which is used is a non-ion conducting polymer, so ions cannot penetrate or move through the binder polymer c. Therefore, in this case also, penetration of lithium ions into the electrode active substance a is blocked as in the case of a prior art electrode. As a result, the battery performance declines.

In USP 5,641,590 (Japanese Patent Laid-Open Hei 9-50824), the inventors disclose a method for manufacturing electrodes wherein an ion-conducting polymer is added to the electrode instead of the prior art binder polymer c which does not have ion-conducting properties. However, in this case, the ion-conducting polymer itself has a weak adhesive force, and as it is merely added to the electrode active substance a when the compound film g is manufactured, it does not permit manufacture of a battery having satisfactory performance.

Batteries are used for various types of electrical components, and they have to satisfy stringent safety criteria with regard to fire, etc. In the case of a lithium-ion battery, oxygen is generated if the LiCoO₂ is heated to high temperature and as there is a risk of explosion or fire if a large current flows due to a short-circuit, safety is a prime consideration.

### Disclosure of the invention

It is an object of this invention to provide a highly efficient electrode.

It is a further object of this invention to provide an electrode with a high level of safety.

It is a further object of this invention to provide a secondary cell with a high level of safety.

It is a further object of this invention to provide an extremely safe electric double layer capacitor.

It is a further object of this invention to provide a secondary cell which does not use an electrolyte.

It is a further object of this invention to provide an electric double layer capacitor which does not require the use of electrolyte. This invention specifically relates to:
an electrode structure for electrical components wherein ions migrate between electrodes, wherein a powdered electrode active substance coated with an ion-conducting polymer or a powdered large surface material is made to adhere to a current-collecting member,
a secondary cell comprising a positive electrode structure and negative electrode structure comprising a current-collecting member to which a powdered electrode active substance coated with an ion-conducting polymer is made to adhere, and an ion-conducting substance disposed between the positive electrode structure and negative electrode structure,
a method of manufacturing an electrode structure for electrical components wherein ions migrate between electrodes, wherein the electrode structure is formed by press-sliding a mixture of at least an ion-conducting polymer or ion-conducting polymer raw material with a powdered electrode active substance or a powdered large surface material so as to coat the powdered electrode active substance or a powdered large surface material with the ion-conducting polymer, and applying the product to a current-collecting member,
a method of manufacturing a secondary cell wherein ions migrate between electrodes, wherein an ion-conducting substance is disposed between a positive electrode structure and a negative electrode structure formed by press-sliding at least an ion-conducting polymer and a powdered electrode active substance so as to coat the powdered electrode active substance with the ion-conducting polymer, and applying the product to a current-collecting member, and
an electric double layer capacitor having an electrode structure comprising a current-collecting member to which a powdered large surface material coated with an ion-conducting polymer is made to adhere and an ion-conducting substance disposed between the electrode structure.

### Brief Description of the Drawings

Fig. 1 is a diagram showing the manufacture of an electrode structure comprising an electrode active substance which supplies ions.

Fig. 2 is a diagram of an electrode structure comprising an electrically conducting substance wherein electricity moves between ions.

Fig. 3 is a schematic view of a secondary cell.

Fig. 4 is a descriptive diagram of a pressure-sliding mixer.

Fig. 5 is a schematic view of the press-sliding mixer wherein the bottom surface of a container is flat.

Fig. 6 is another schematic view of the press-sliding mixer.

Fig. 7 is a front view of the press-sliding mixer.

Fig. 8 is a lateral view of the press-sliding mixer.

Fig. 9 is a descriptive diagram of a cohesion device.

Fig. 10 is an electron micrograph of LiCoO₂ which has not received any processing.

Fig. 11 is an electron micrograph of a positive electrode structure obtained in a third embodiment.

Fig. 12 is a photograph of a secondary electronic image of the positive electrode structure obtained in the third embodiment.

Fig. 13 is a diagram showing the manufacture of a positive electrode structure of a secondary cell according to the prior art.

Fig. 14 is a diagram showing the manufacture of a negative electrode structure of a secondary cell according to the prior art.

Fig. 15 is a schematic view of a secondary cell according to the prior art.

This invention will now be described in more detail referring to the drawings.

### (a) Electrical components

Electrical components wherein ions migrate between electrodes are those in which an ion-conducting substance is disposed between electrode structures functioning as electrodes, and ions migrate within the ion-conducting substance so that a current flows between the electrodes, e.g., primary cells, secondary cells, and an electric double layer capacitor..

Batteries are characterized in that an ion-conducting substance disposed between the positive electrode structure and negative electrode structure and that an ion, including a proton or a positive hydrogen ion, migrates between electrodes and is accumulated. An electric double layer capacitor is characterized in that an ion-conducting substance is disposed between a pair of electrode structures and an electric double layer is formed between a large surface material within the electrode structures and an electrolyte of the ion-conducting substance.

### (b) Electrode structures

Electrode structures are used as electrodes in these electrical components, and exchange electrical charges with ions or draw ions. For this purpose, they have a construction in which a powdered electrode substance coated with an ion-conducting polymer, is made to adhere to a current-collecting member. For instance, they have a construction in which the powdered electrode active substance used for batteries or a powdered large surface material with a large surface area used for an electric double layer capacitor is made to adhere to a current-collecting member.

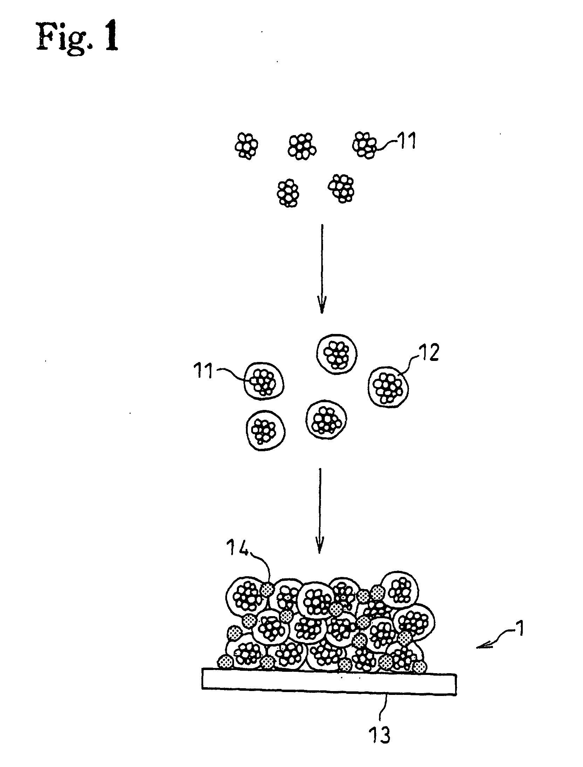

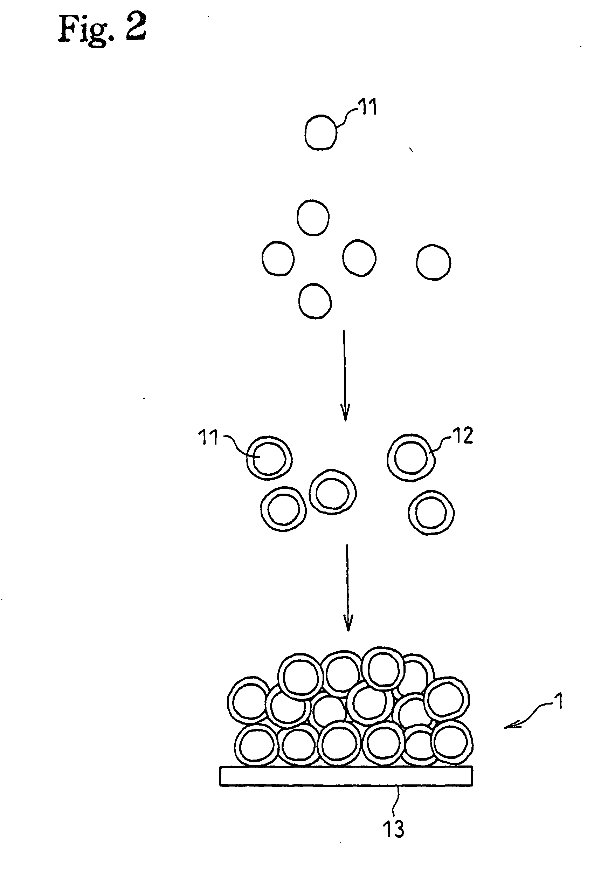

Fig. 1 shows a process for manufacturing an electrode structure 1 wherein a powdered electrode substance, i.e., a powdered electrode active substance 11, comprising particles of a compound such as LiCoO₂ is coated with an ion-conducting polymer 12, and is made to adhere to a current-collecting member 13. Likewise, Fig. 2 shows a process for manufacturing the electrode structure 1 wherein a powdered electrode substance, i.e., the powdered electrode active substance 11 having a form such as that of graphite or hard carbon is coated with the ion-conducting polymer 12, and is made to adhere to the current-collecting member 13. A powdered large surface material such as an activated carbon as the powdered electrode substance may be coated with the ion-conducting polymer and is adhered to the current-collecting member to form an electrode structure of the electric double layer capacitor.

Fig. 1 shows the case where the electrical conductivity of the powdered electrode active substance 11 is low. The electrical conductivity in the powdered electrode active substance and between the powdered electrode active substance 11 and current-collecting member 13, is increased and the current-collecting efficiency improved by mixing with a powdered electrically-conducting substance 14. The powdered electrically-conducting substance 14 may or may not be coated with the ion-conducting polymer.

"Coating" refers to a state of contact wherein ions can easily migrate between the ion-conducting polymer 12 and the powdered electrode substance, i.e., the powdered electrode active substance 11 over their entire surfaces or the powdered large surface material over their entire surfaces. The ion-conducting polymer 12 is coated on the surface of the powdered electrode active substance 11 or the powdered large surface material so that the latter is covered by the ion-conducting polymer 12. The powdered electrode active substance 11 becomes more active the finer the particles of which it is comprised, but its activity can be suppressed to give greater stability by coating with the ion-conducting polymer 12.

If the layer of the coated ion-conducting polymer 12 is thick, conductivity decreases and current-collecting efficiency is poorer, so it is preferably thin.

The term "powdered" as used in the powdered electrode active substance 11, the powdered electrically-conducting substance 14, or the powdered large surface material refers to a substance having a fine particle state. In some cases, it may refer to a state wherein a large number of substances having a fine particle state are agglomerated.

### (c) Powdered electrode active substance

The powdered electrode active substance may be a material which permits insertion and separation of ions, or a π-conjugated electrically-conducting polymer material.

There is no particular limitation on the electrode active material used as the positive electrode in a non-aqueous electrolytic battery, but in the case of a rechargeable secondary cell, a chalcogen compound permitting insertion and separation of lithium ions or a complex chalcogen compound containing lithium may for example be used.

Examples of chalcogen compounds are FeS₂, TiS₂, MoS₂, V₂O₅, V₆O₁₃ and MnO₂. Examples of chalcogen compounds containing lithium are LiCoO₂, lithium complexes represented by LixNiyM₁-yO₂ (where M is at least one metal element chosen from transition metals or Al, but preferably at least one metal element chosen from Co, Mn, Ti, Cr, V and Al, and 0.05≦x≦1.10, 0.5≦y≦1.0), LiNiO₂, LiMnO₂ and LiMn₂O₄. These compounds may be obtained from the oxides, salts or hydroxides of lithium, cobalt, nickel or manganese as starting materials, mixing the starting materials depending on the composition, and firing in an oxygen atmosphere at a temperature in the range of 600 °C-1000 °C.

There is no particular limitation on the electrode active substance used as the negative electrode in a non-aqueous electrolyte battery, but a material permitting insertion and separation of lithium ions may be used such as lithium metal, lithium alloy (alloys of lithium and aluminum, lead and indium, etc.), and carbon materials.

Examples of π -conjugated conducting polymer materials are polyacetylenes, polyanilines, polypyrroles, polythiophenes, poly-ρ (para)-phenylenes, polycarbazoles, polyacenes and sulfur polymers.

In particular, in non-aqueous electrolyte primary cells, a large battery capacity can be obtained by using lithium metal for the negative electrode.

In non-aqueous electrolyte secondary cells, an excellent cycle life can be obtained by using carbon materials which permit insertion and separation of lithium as the negative electrode. There is no particular limitation on the carbon material, examples being pyrolytic carbon, cokes (pitch coke, needle coke or petroleum coke), graphites, glass carbons, organic polymer compound firing products (products obtained by firing and carbonizing phenolic resins and furan resins at a suitable temperature), carbon fiber and active carbon.

### (d) Powdered electrode substance with a large surface area

A powdered electrode substance with a large surface area is a powdered large surface material that may draw many ions on that surface. A preferable powdered large surface material has its specific surface area of 500m²/g or larger, more preferably 1000m²/g or larger, further more preferably 1500m²/g-3000m²/g, and its average particle diameter of 30µm or lower, more preferably 5-30µm carbon material. If the specific surface area and the average particle diameter are out of the above-specified range, and it may be difficult to secure a high electrostatic capacity and a low resistance electric double layer capacitor.

A preferable powdered large surface material especially is an activated carbon resulting from activating the carbon material such as by a steam activating treatment and a fused KOH activating treatment. The activated carbon for example may be palm shell activated carbon, a phenol activated carbon, a petroleum coke type activated carbon, and polyacenes. One of the above activated carbon types or combination of two ore more activated carbon types may be employed. Phenol activated carbon, a petroleum coke type activated carbon, and a polyacenes are preferable since they provide a larger electrostatic capacity.

### (e) Powdered electrically-conducting substance

The powdered electrically-conducting substance increases the electrical conductivity of the electrode structure, there being no particular limitation thereon, but metal powders and carbon powder may be used. As carbon powder, pyrolytic carbon such as carbon black and its graphitization products, artificial and natural scaly graphite powder, and carbon fiber and its graphitization products, are suitable. Mixtures of these carbon powders may also be used.

### (f) Ion-conducting polymer

The ion-conducting polymer is a polymer which can dissolve at least the lithium salts described hereafter at a concentration of at least 0.1 M (moles/l), the polymer containing the lithium salt at a concentration of at least 0.1M having an electrical conductivity of 10⁻⁸ S (siemens)/cm at room temperature. It is to be particularly preferred that the ion-conducting polymer dissolves at least lithium salts to a concentration of 0.8M-1.5M, the resulting polymer solution having an electrical conductivity of 10⁻³ S/cm - 10⁻⁵ S/cm at room temperature.

The lithium salt is at least one type of lithium salt having ClO₄⁻, CF₃SO₃⁻, BF₄⁻, PF₆⁻, AsF₆⁻, SbF₆⁻, CF₃CO₂⁻ or (CF₃SO₂)₂N⁻ as anion.

The ion-conducting polymer raw material is a substance which produces the ion-conducting polymer by cross-linking, etc., when energy is supplied externally. The energy may be heat, ultraviolet light, light or electron radiation.

### (g) Current-collecting member

The current-collecting member should be a substance which easily passes electricity. Its shape and material are selected according to the electrical components involved, and as an example, it can be formed by fashioning an electrically-conducting substance such as aluminum or copper into a plate, foil or mesh.

In the case of a plate or foil current-collecting member, one surface or both surfaces are used according to the structure of the electrical components, and the powdered electrode active substance is made to adhere to one surface or both surfaces.

### (h) Secondary cell

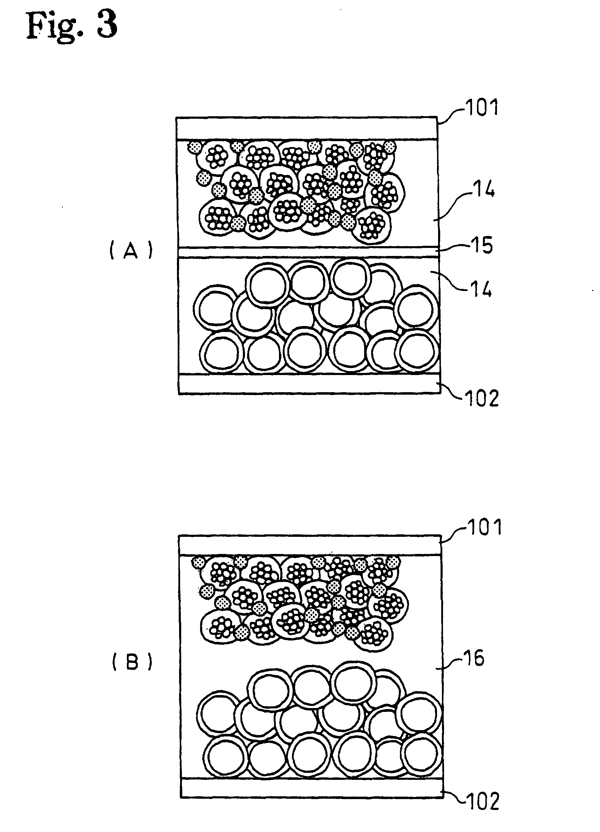

The secondary cell comprises the ion-conducting substance disposed between two types of the electrode structures 1. The secondary cell is formed by introducing a liquid such as the electrolyte 14 between an electrode structure 101 of the positive electrode and an electrode structure 102 of the negative electrode, and disposing a separator 15 between them as shown for example in Fig. 3(A). Alternatively, it is formed by disposing a solid electrolyte substance such as an ion-conducting polymer 16 between the electrode structure 101 of the positive electrode and the electrode structure 102 of the negative electrode as shown in Fig. 3(B).

### (i) Electric double layer capacitor

The electric double layer capacitor has a construction in which the powdered large surface material is used to form a pair of electrode structures and an electrolyte substance is disposed between the pair of electrode structures.

The method of manufacturing these electrode structures will now be described.

### (a) Manufacture of electrode structure

If the powdered electrode active substance is used as the powdered electrode substance, to manufacture the electrode structure, an extremely thin ion-conducting polymer or ion-conducting polymer raw material is coated on the surface of the powdered electrode active substance 11. Next, a solvent is added to liquefy the mixture into a paste which is applied to the current-collecting member, and dried to evaporate the solvent. Alternatively, the solvent can be added from the beginning to make a paste when the ion-conducting polymer or ion-conducting polymer raw material is coated. If the powdered large surface material is used as the powdered electrode substance, the same process applied with the powdered electrode active substance may be employed to manufacture the electrode structure.

In this process, a minute amount of the ion-conducting polymer or ion-conducting polymer raw material is used, the particle surfaces of the powdered electrode active substance are coated with the ion-conducting polymer, no voids are formed, and gaps in the powdered substance are reduced.

To coat the ion-conducting polymer or ion-conducting polymer raw material on the powdered electrode active substance, the ion-conducting polymer or ion-conducting polymer raw material and the powdered electrode active substance are press-slid together to obtain a press-slid product.

### (b) Press-sliding

Press-sliding is the action of sliding while pressing mixtures 10 of the ion-conducting polymer 12 or the raw material of the ion-conducting polymer 12 and the powdered substance 11 together. An external force is applied to the mixtures so that they cohere to each other and the particles rotate, and this process is performed repeatedly to obtain a press-sliding product.

### (c) Press-sliding mixer

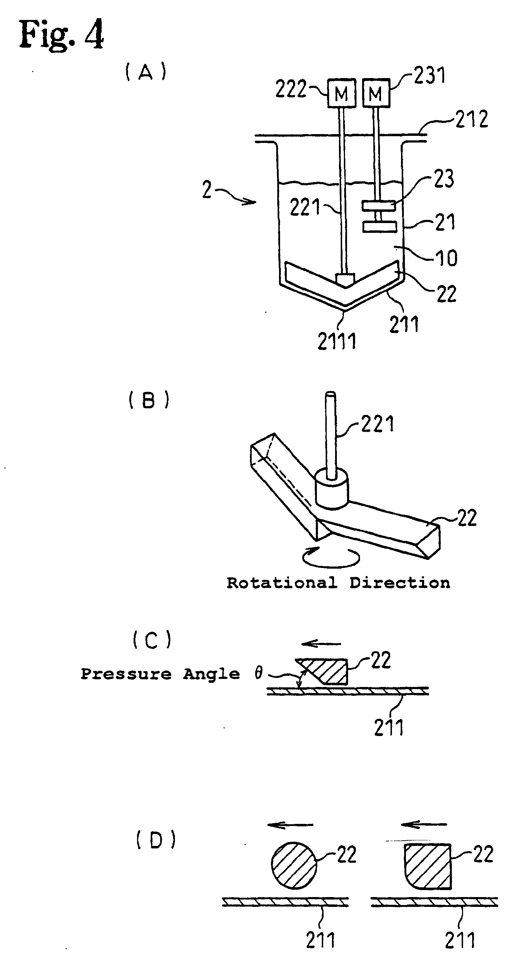

The press-sliding mixer is shown, for example, in Fig. 4. The mixture 10 of the ion-conducting polymer 12 or its raw material with the powdered substance 11, or the mixture 10 comprising this mixture and a solvent or the like, is introduced into a container 21, and the main blade 22 is rotated. There is a gap between a base 211 of the container 21 and a bottom surface of the main blade 22. When the main blade 22 is rotated, part of the mixture 10 enters the space between the base 211 of the container and the main blade 22, is subjected to press-sliding, and is kneaded. This process is repeated so that the ion-conducting polymer 12 or its raw material coats the powdered substance 11.

A press-sliding mixer 2 may if necessary be provided with a dispersion blade 23 in the container 21. The dispersion blade 23 is rotated at high speed to disperse the press-slid mixture 10.

### (d) Container

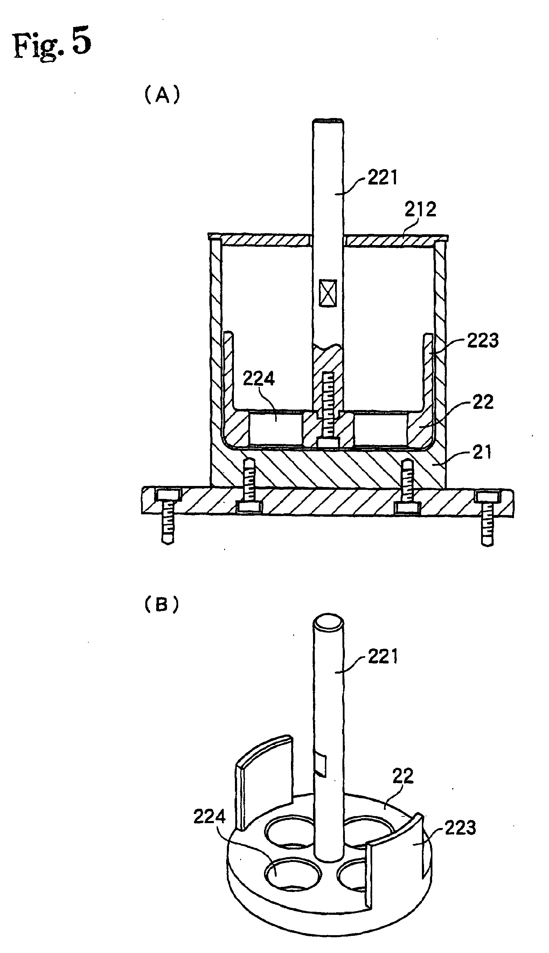

The container 21 is provided for holding the mixture 10 which is press-slid and stirred. The bottom surface of the container 21 may be such as to permit press-sliding of the mixture 10, and may be slanting as in Fig. 4 or flat as in Fig. 5. For example, if it is slanting, it has a bottom part 2111, and slants upwards from the bottom part 2111 towards the circumference. The center part may be situated in a low position, and have a slope rising towards the circumference. The bottom 211 may be formed in the shape of, for example, a grinding mortar, and the angle of the bottom part 2111 may for example be 120 degrees. The bottom 211 of the container is wear-resistant, and is formed by thermal spraying with tungsten or carbide using SUS. Plural bottom parts 2111 of this type may also be formed on the bottom surface.

### (e) Main blade

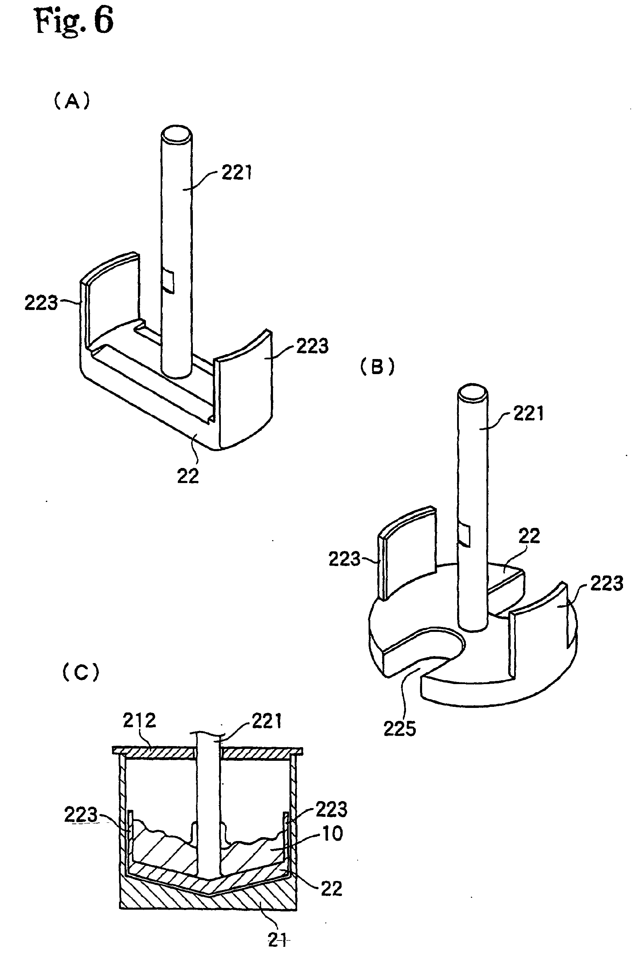

The main blade 22 functions together with the bottom surface of the container 21, serving to press-slide and stir the mixture. The main blade may have a number of different shapes. For example, in Fig. 5 or Fig. 6(B), it is disk-shaped or plate-shaped and in Fig. 6(A), it is fashioned into a wide blade so as to provide a large surface area between the bottom surface of the container and the blade adjacent to it, thereby increasing the efficiency of press-sliding. If the main blade is disk-shaped, for example, it has some through holes 224 as is shown in Fig. 5(B) and notched grooves 225 as is shown in Fig. 6(B). The mixture is transported to a gap between the bottom surface of the main blade 22 and the container via the through holes 224 or the notched grooves 225.

If the mixture adhering to the lateral surfaces of the container is removed, stirring efficiency can be increased. For this purpose, members adjacent to the lateral surfaces of the container, for example scrapers 223, may be attached to the tip of the main blade as shown in Fig. 5 or Fig. 6. The scrapers 223 rotate together with the main blade so that mixture in the vicinity of the lateral surfaces of the container is scraped off, and is transported to the gap between the bottom surface of the container and the blade surface. Hence, press-sliding is performed with high efficiency. At least, the tip of the main blade is to remove the mixture adhered to the lateral surface of the container and may be positioned away from the main blade for the independent operation.

In the main blade 22, a shaft is attached in a position corresponding to the bottom part 2111 of the container 21 as shown for example in Fig. 4(B), and if the bottom surface of the container is slanting, it curves upwards along the bottom of the container from the bottom part 2111. The main blade 22 may comprise two blades attached from the center part as shown in Fig. 4(B), or it may comprise a larger number of blades, e.g. 10 or more, depending on the amount and type of mixture. Instead of a large number of blades, a wide blade having a wide base may also be used. This allows larger surface for the press-sliding action, thereby providing more efficient press-sliding.

The main blade is rotated by a main motor 222. By permitting the blade to rotate freely in the reverse direction, more complex press-sliding control can be performed. A sympathetic flow may also be set up in the mixture due to the rotation of the main blade, so sympathetic flow is prevented by reversing the main blade during the rotation. For example, forward rotation is performed for 10 seconds, the blade is stopped, and reverse rotation is then performed for 10 seconds. By repeating this action, press-sliding control is performed. Practically identical results for press-sliding were obtained when this back and forth reverse control was performed for approximately 30 minutes, and when rotation in the same direction was performed for approximately 3 hours. There are also many other rotation methods, for example the rotation angle can continuously be suitably varied like a sine curve, etc. The rotation speed of the main blade, i.e., the number of rotations, is set low, for example to 120 rpm or less, when press-sliding is performed.

The gap between the bottom surface of the container 21 and the base surface of the main blade 22 is set as narrow as is necessary for press-sliding the mixture, for example 15 mm or less. This distance depends on the capacity of the press-sliding mixer 2 and on the shape of the main blade, etc.

For the main blade 22 having the particular shape described in Fig. 4, the surface in the motion direction (press-sliding direction) of the main blade 22 is formed so that a pressing angle 6 relative to the bottom surface of the container 21 is an acute angle. For example, if the cross-section of the main blade 22 is a reverse trapezoid as shown in Fig. 4(C), the pressing angle is from 3 degrees to 70 degrees. The cross-section of the main blade 22 may also be circular or have a rounded corner as shown in Fig. 4(D). The material of the main blade has wear-resistant properties, and is formed for example by thermal spraying with tungsten or carbide using SUS.

If a surface in a direction opposite to the motion direction (press-sliding direction) of the main blade 22 is formed for example effectively perpendicular to or at an obtuse angle to the bottom surface, the mixture 10 can be collected around the main shaft 221 by rotating the main shaft 221 in the reverse direction.

If there are plural bottom parts 2111 on the bottom surface, the center parts of the main blade 22 are also disposed in positions of the bottom part corresponding to their number.

### (f) Dispersing blade

The dispersion blade 23 is intended to disperse the mixture 10 which has been press-slid by the main blade 22. The dispersion blade 23 is disposed in a position at which the mixture 10 can be dispersed, and it rotates at a high speed such as 1000-4000 rpm. Due to this high speed rotation, the ion-conducting polymer 12 or its raw material coated on the particle surfaces of the powdered substance 11 uniformly disperses through the whole of the powdered substance. The mixture adheres on the area surrounding the main shaft 221 of the main blade 22 when in firm mixing or low clay dispersion and tends to be ununiformed mixing. The dispersion blade 23 is positioned on the main shaft 221 of the main blade 22, rotating the same from the dry mixing stage to prevent the adhesion on the area surrounding the main shaft 221.

### (g) Action of press-sliding mixer

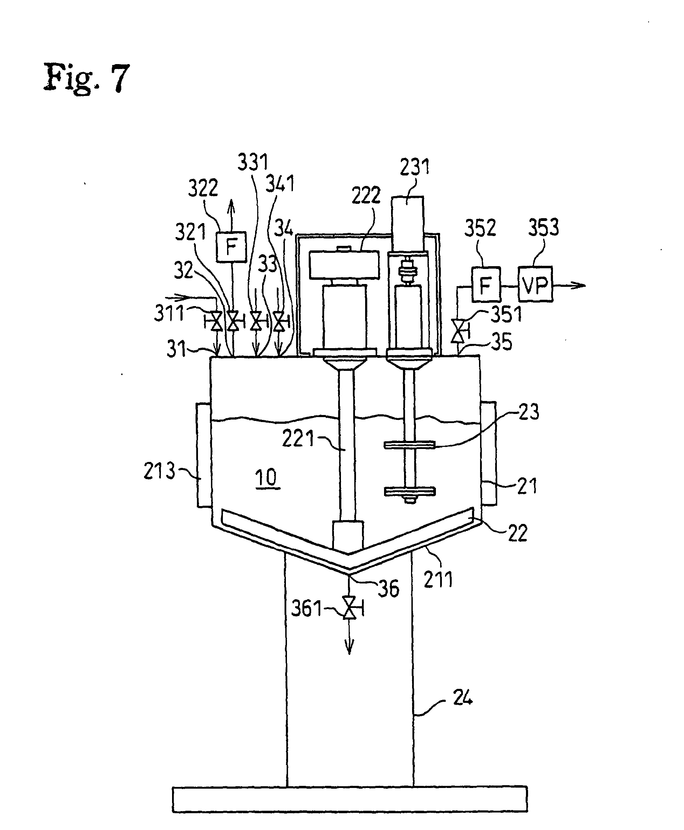

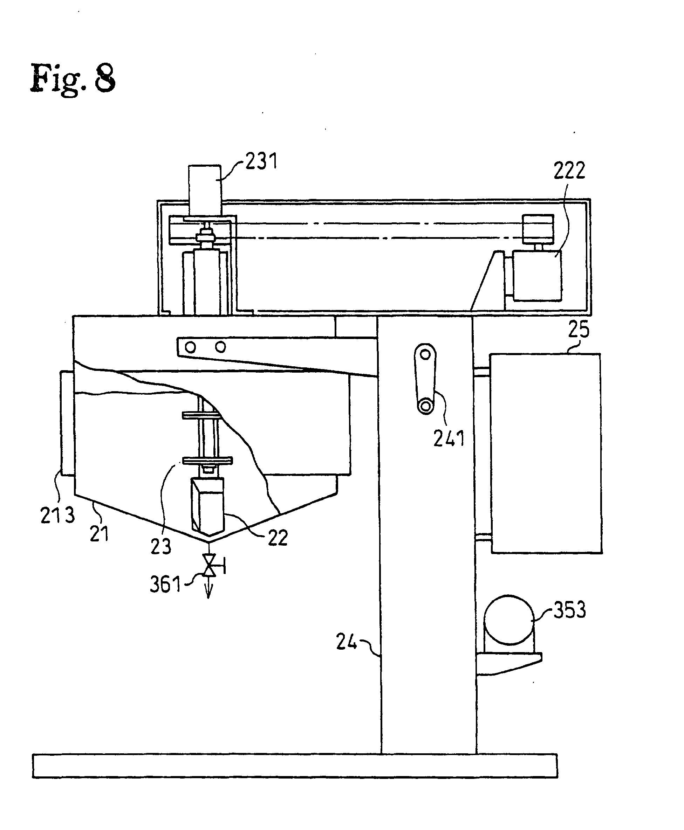

A description of the operation using the press-sliding mixer of Fig. 7 and Fig. 8 will now be given. The press-sliding mixer is supported on a supporting platform 24, the container 21 being raised by a handle 241, and is controlled by a control panel 25.

First, the powdered substance 11 (containing an additive) is measured out, and introduced from a powdered substance input port 34. In an automated system, a measuring hopper or the like is installed above the powdered substance input port 34 for storage and measurement, and a valve 341 of the powdered substance input port is automatically opened by an input command. Simultaneously, to eliminate measurement errors from pressure rise in the container due to introduction of the powder, a discharge port 32 fitted with an aspiration filter 322 is opened alone so that only air is discharged.

Next, a valve 331 of an input port 33 for the ion-conducting polymer or its raw material is opened, and the polymer or its raw material is measured out manually or automatically and introduced into the container in the same way as the powdered substance. After introduction of the powdered substance and ion-conducting polymer or its raw material is complete, the input valves 331, 341 are closed. Further, if warm water at 30 °C is recirculated through a jacket 213 of the container to promote wetting of the powdered substance and the ion-conducting polymer or its raw material, the wetting efficiency can be improved. However, when a penetration-assisting solvent is used, processing is performed at ordinary temperature.

Next, the main motor 222 is rotated at a low speed of about 10 rpm, the mixture 10 of the ion-conducting polymer or its raw material and the powdered substance is press-slid between the bottom surface of the container 21 and the main blade 22, and the ion-conducting polymer or its raw material gradually begins to penetrate the powdered substance. At this time, the press-slid mixture 10 rises up the container at the tip of the main blade 22, the mixture 10 falls down from above the center part of the container, and a turning over action takes place in the container over its entire circumference. This is repeated regularly so that the whole mixture is uniformly press-slid. After repeating the action for approximately 1 hour, the rotation speed of the main shaft 221 is automatically or manually increased to 60 rpm, and when wetting of the mixture 10 has reached effectively half of the surface area, a vacuum pump 353 of a degassing port 35 is operated, a degassing valve 351 is opened, and degassing is performed via a filter 352 for about 1 hour. In other words, the main blade 22 press-slides the mixture 10 while degassing is performed, so wetting and penetration dispersion of the ion-conducting polymer or its raw material in the powdered substance is promoted. Here, care should be taken when a low boiling-point solvent is added to the ion-conducting polymer or its raw material to promote dispersion in the powdered substance, as the concentration or viscosity of the ion-conducting polymer or its raw material increases and dispersion becomes difficult if suction degassing is continuously performed by a high vacuum blower.

When penetration degassing has reached about 70% after degassing for approximately 1 hour, the dispersion blade is rotated at 2800 rpm to promote dispersion.

### (h) Application to current-collecting member

The press-slid substance which has been made into a paste is thinly applied to the surface of the current-collecting member. After application, the solvent evaporates and dries to obtain the electrode structure. The device which applies the press-slid substance to the current-collecting member may be a doctor knife applicator.

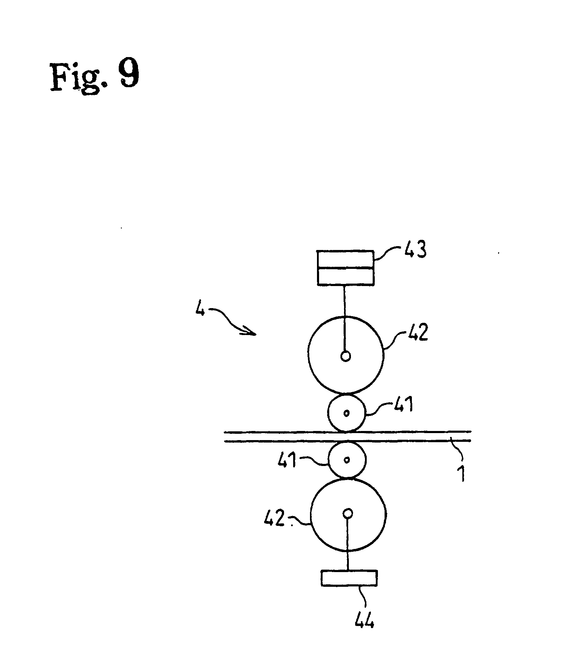

The applied press-slid substance may be pressed against the current-collecting member to make it adhere to it more strongly. To achieve this, the bonding device 4 shown in Fig. 9 may for example be used. The press-slid substance can be made to adhere to the current-collecting member by gripping the electrode structure 1 comprising the current-collecting member coated with the press-slid substance between pressure rollers 41, applying a pressure to backup rollers 42 by a pressure device 43, and rotating the rollers.

### Description of the Preferred Embodiments

Hereafter, an embodiment of a lithium ion secondary cell will be described.

### (a) Example of manufacture of positive electrode structure (Example 1)

9.1 weight parts of LiCoO₂ of average particle size 5 µm which is a powdered electrode active substance, and 0.6 weight parts of graphite powder of average particle size 4 µm which is a powdered electrically-conducting substance, were introduced into a press-sliding mixer, and press-slid for 20 minutes. Next, 0.546 weight parts of an ion-conducting polymer raw material (A1) and 3.5 weight parts of acetonitrile were added. The ion-conducting polymer raw material (A1) was a mixture, and its composition and mixing ratio are shown in Table 1.

### [Table 1]

The press-slid substance to which the ion-conducting polymer raw material (A1) was added, was press-slid in the press-sliding mixer for 5 hours. The press-slid substance was paste-like. 0.254 weight parts of polymeric MDI, MR-200 (NPU Co.) was added to the press-slid substance, and the mixture stirred for 5 minutes in the press-sliding mixer. The press-slid substance was removed, transferred to aluminum foil of thickness 20 µm, and spread by a doctor knife applicator of 100 µm gap. The resulting product was left at room temperature for 15 minutes, and then heated at 80°C for 1 hour. The thickness of the positive electrode structure obtained was 80 µm. The same effectiveness is seen when spreading by a doctor knife applicator of 200µm gap.

### (b) Example of manufacture of positive electrode structure (Example 2)

9.0 weight parts of LiCoO₂ of average particle size 5 µm which is a powdered electrode active substance, and 0.6 weight parts of ketjenblack and 0.2 weight parts of graphite powder of average particle size 4 µm which are powdered electrically-conducting substances, were introduced into a press-sliding mixer (capacity 300cc), and press-slid for 20 minutes. Next, 1.172 weight parts of an ion-conducting polymer raw material (A1) and 3.5 weight parts of acetonitrile were added. These mixtures were press-slid for 5 hours in the press-sliding mixer. The press-slid substance was paste-like. 0.548 weight parts of polymeric MDI, MR-200 (NPU Co.), was added to the press-slid substance, and the mixture press-slid for 5 minutes. The press-slid substance was removed, transferred to aluminum foil of thickness 20 µm, and spread by a doctor knife applicator of 100 µm gap. The resulting product was left at room temperature for 15 minutes, and heated at 80°C for 1 hour. The thickness of the electrode obtained was 80 µm. The same effectiveness is seen by the use of 10.0 weight parts of acetonitrile and spreading a doctor knife applicator of 250µm gap.

### (c) Example of manufacture of positive electrode structure (Example 3)

9.1 weight parts of LiCoO₂ of average particle size 5 µm which is a powdered electrode active substance, 0.341 weight parts of an ion-conducting polymer raw material (A1) and 3.0 weight parts of acetonitrile were introduced into a press-sliding mixer (capacity 300cc), and the mixture press-slid for 7 hours. The press-slid substance was paste-like. Next, 0.159 weight parts of polymeric MDI, MR-200 (NPU Co.) was added, and the mixture press-slid for 5 minutes. The press-slid substance was removed, transferred to aluminum foil of thickness 20 µm, and spread by a doctor knife applicator of 100 µm gap. The resulting product was left at room temperature for 15 minutes, and heated at 80°C for 1 hour. The thickness of the electrode obtained was 80 µm. The same effectiveness is seen when spreading by a doctor knife applicator of 200µm gap.

### (d) Example of manufacture of positive electrode structure (Example 4)

9.1 weight parts of LiCoO₂ of average particle size 5 µm which is a powdered electrode active substance, and 0.6 weight parts of graphite powder of average particle size 4 µm which is a powdered electrically-conducting substance, were introduced into a press-sliding mixer device (capacity 300cc), and press-slid for 20 minutes. Next, 2.0 weight parts of an ion-conducting polymer raw material (A2) and 3.0 weight parts of acetonitrile were added. The ion-conducting polymer raw material (A2) was a mixture, and its composition and mixing ratio are shown in Table 2. In the Table 2, the same result may be obtained by the use of polyethyleneglycoldimethacrylate (536 molecular weight) instead of trimethylolpropanetrimethacrylate.

### [Table 2]

The press-slid substance to which the ion-conducting polymer raw material (A2) was added, was press-slid in the press-sliding mixer (capacity 300cc) for 5 hours. The press-slid substance was paste-like. A solution of 0.01 weight parts of 2,2'-azobis (2,4-dimethylvaleronitrile) and 0.5 weight parts of a (1/1) vol liquid electrolyte of ethylene carbonate (EC)/diethylene carbonate (DEC) was added to the press-slid substance, and the mixture further press-slid for 5 minutes. The press-slid substance was removed, transferred to aluminum foil of thickness 20 µm, and spread by a doctor knife applicator of 100 µm gap. The resulting product was left at room temperature for 15 minutes, and heated at 80 °C for 3 hours. The thickness of the electrode obtained was 80 µm. The same effectiveness may be expected by the use of 0.5 weight parts of the ion-conducting polymer raw material (A2), 0.003 weight parts of 2,2'-azobis (2,4-dimethylvaleronitrile), and by spreading a doctor knife applicator of 200µm gap.

### (e) Example of manufacture of negative electrode structure (Example 5)

9.1 weight parts of graphite powder of average particle size 5 µm which is a powdered electrode active substance, 0.341 weight parts of an ion-conducting polymer raw material (A1) and 3.0 weight parts of acetonitrile were introduced into a press-sliding mixer (capacity 300cc), and the mixture press-slid for 7 hours. The press-slid substance was paste-like. Next, 0.159 weight parts of polymeric MDI, MR-200 (NPU Co.) was added, and the mixture press-slid for 5 minutes. The press-slid substance was removed, transferred to copper foil of thickness 20 µm, and spread by a doctor knife applicator of 100 µm gap. The resulting product was left at room temperature for 15 minutes, and heated at 80°C for 1 hour. The thickness of the electrode obtained was 80 µm. The same effectiveness may be expected by the use of 10.0 weight parts of the acetonitrile and spreading a doctor knife applicator of 250µm gap.

### (f) Example of manufacture of positive electrode structure (Example 6)

9.1 weight parts of graphite powder of average particle size 5 µm which is a powdered electrode active substance, 0.2 weight parts of an ion-conducting polymer raw material (A2) and 3.0 weight parts of acetonitrile were introduced into a press-sliding mixer (capacity 300cc), and press-slid for 5 hours. The press-slid substance was paste-like. A solution of 0.01 weight parts of 2,2'-azobis (2,4-dimethylvaleronitrile) and 0.5 weight parts of a liquid electrolyte of ethylene carbonate (EC)/diethylene carbonate (DEC) in a volume ratio of 1:1 was added to the press-slid substance, and the mixture further press-slid for 5 minutes. The press-slid substance was removed, transferred to copper foil of thickness 20 µm, and spread by a doctor knife applicator of 100 µm gap. The resulting product was left at room temperature for 15 minutes, and heated at 80°C for 3 hours. The thickness of the electrode obtained was 80 µm. The same effectiveness may be expected by the use of 0.8 weight parts of the ion-conducting polymer raw material (A2), 10.0 weight parts of acetonitrile, 0.004 weight parts of 2,2'-azobis (2,4-dimethylvaleronitrile), and by spreading a doctor knife applicator of 250µm gap.

### (g) Analysis of electrode structure

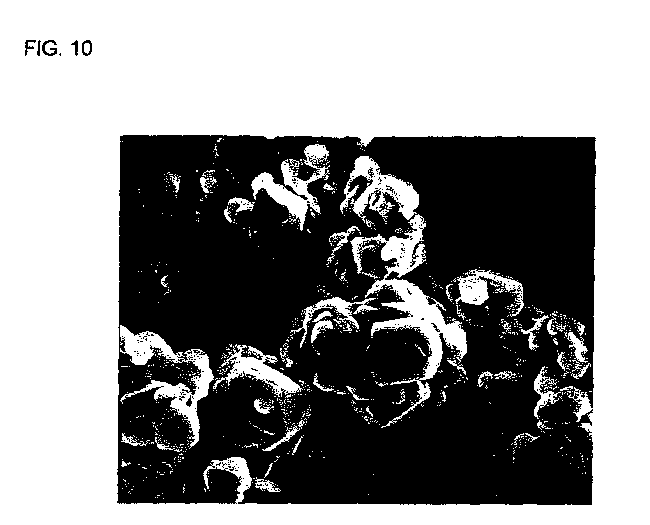

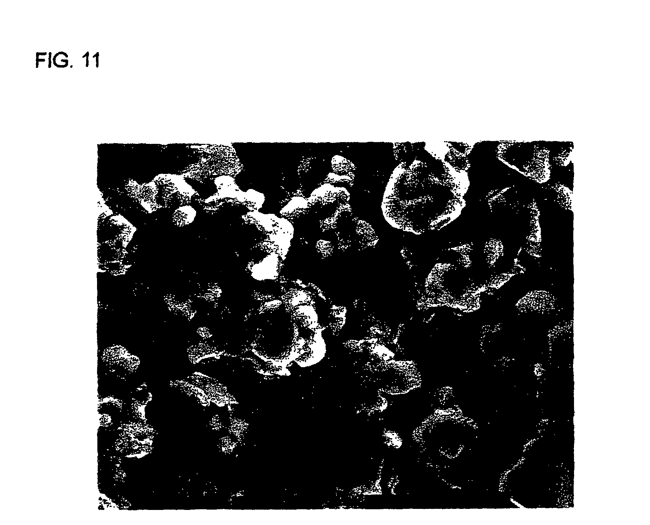

Fig. 10 shows 5000 times magnified electron micrograph of LiCoO₂ of average particle size 5 µm which had not received any processing. In Fig. 10, the corners of the compound particles of LiCoO₂ are square and clearly visible. The electron micrograph of Fig. 11 is an electron micrograph of the positive electrode structure obtained in Example 3. In Fig. 11, the corners of the compound particles of LiCoO₂ are smooth, and appear to be covered by a film. Hence, comparing with the LiCoO₂ in Fig. 10, it is evident that the LiCoO₂ particles in Fig. 11 are uniformly covered with a film of ion-conducting polymer.

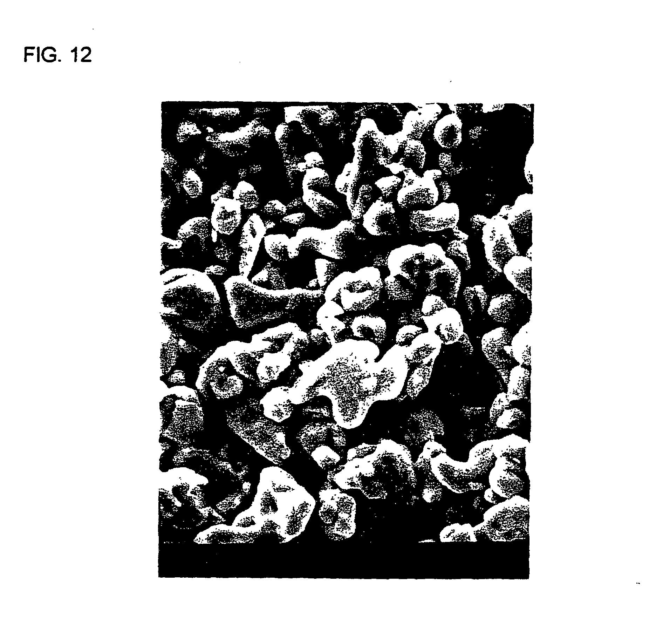

Fig. 12 shows 5000 times magnified a two-dimensional electronic image of the surface of the positive electrode structure obtained in Example 3 measured by a Shimadzu EPMA-8705 Electron Probe Micro-Analyzer. The particles of Fig. 12 have smooth corners and appear to be covered by a coating.

### (h) Comparative example of positive electrode structure (Comparative Example 1)

11.5 weight parts of n-methylpyrrolidine containing, in solution, 0.5 weight parts of polyvinylidene fluoride (PVDF) which has no ion-conducting property as a polymer binder, was mixed with 9.0 weight parts of LiCoO₂ of average particle size 5 µm which is a powdered electrode active substance, and 0.8 weight parts of ketjenblack and 0.2 weight parts of graphite powder of average particle size 4 µm which are powdered electrically-conducting substances, in an ordinary blade mixer. After mixing for 8 hours, the mixture was removed, transferred to copper foil of thickness 20 µm, and spread by a doctor knife applicator of 100 µm gap. The resulting product was then heated to evaporate n-methylpyrrolidine. The thickness of the electrode obtained was 80 µm. The same result is expected by the use of 5.0 weight parts of n-methylpyrrolidine and spreading a doctor knife applicator of 200µm gap.

### (i) Comparative example of positive electrode structure (Comparative Example 2)

25.5 weight parts of n-methylpyrrolidine containing, in solution, 0.5 weight parts of polyvinylidene fluoride (PVDF) which has no ion-conducting property as a polymer binder, was mixed with 9.5 weight parts of graphite powder of average particle size 4 µm which is a powdered electrically-conducting substance, in an ordinary blade mixer. After mixing for 8 hours, the mixture was removed, transferred to copper foil of thickness 20 µm, and spread by a doctor knife applicator of 100 µm gap. The resulting product was then heated to evaporate n-methylpyrrolidine. The thickness of the electrode obtained was 80 µm. The same result is expected by the use of 10.0 weight parts of n-methylpyrrolidine containing, in solution, 1.0 weight parts of polyvinylidene fluoride (PVDF) and spreading a doctor knife applicator of 250µm gap.

### (j) Charging/discharging tests

A test lithium ion secondary cell was manufactured using the positive electrode structures manufactured in the examples and comparative examples. The positive electrode and negative electrode were both cut out to have an electrode surface area of 4cm². Completely solid polymer (all polymer), polymer gel electrolyte (polymer gel), liquid electrolyte (liquid) and a separator were sandwiched between the positive electrode and negative electrode to manufacture the test cell. The concentration of lithium salt (supporting electrolyte salt) in the respective electrolytes was arranged to be 1M. This cell was charged at 0.3mA per 1cm² of electrolyte surface area to 4.1V, and after allowing to stand for 15 minutes, it was discharged at 0.3mA/cm² to 2.7V. Combinations for which two of these charging/discharging cycles were successfully performed, were considered to be combinations for which charging/discharging is possible, and are shown in Table 3. Table 4 shows the contents of the electrolytes listed in Table 3. The same effectiveness is expected if the thickness of the electrolyte is 20µm at P1-AP4 and 30µm at PG1-PG2.

### [Table 3]

### [Table 4]

In the charging/discharging tests of the examples and comparative examples, test cells using the positive electrode and negative electrode of this invention could be successfully charged and discharged. However, test cells using the electrodes of the comparative examples and a solid or gel electrolyte could not be charged/discharged, although test cells using liquid electrolytes could be charged/discharged.

An embodiment of the electric double layer capacitor is explained next.

### Embodiment of electrode structure of capacitor

An electrode structure for capacitor is manufactured by adding the carbon black as the powdered conducting substance in a phenol activated carbon (manufactured by Kansai Kagaku Corporation) as the powdered electrode substance; dry-mixing with a mixing container; adding the polymer A1 as the binder to be mixed; adding NMP (N methylpyrolidone) as the solvent to be mixed; applying on the current-collecting member by the doctor knife applicator; and drying. The thickness of the electrode is 75µ.

### Industrial Field of Application

This invention makes it possible to obtain an electrode having a satisfactory electromotive effect with ions.

This invention makes it possible to obtain an electrode which is very safe.

This invention further makes it possible to obtain a secondary cell which is very safe.

This invention further makes it possible to obtain an extremely safe electric double layer capacitor.

This invention further makes it possible to obtain a secondary cell or capacitor which does not use an electrolyte.

This invention further makes it possible to obtain an electric double layer capacitor which does not require an electrolyte.

### TABLES

**[Table 1]**

| Ion-conducting polymer raw material (A1) | |
|---|---|
| Substance | Mixing ratio (weight parts) |
| Trifunctional (propylene glycol/ethylene glycol) random copolymer, SANNIX FA-103 (PO/EO=2/8, Mw=3,282, Sanyo Chemical Industries, Ltd.) | 8.36 |
| Trifunctional polyol, 1,4-butadiol | 0.34 |
| Ethylene cyanohydrin | 1.27 |
| Reaction catalyst NC-IM (Sankyo Air Products K.K.) | 0.03 |
| Total | 10 |

**[Table 2]**

| Ion-conducting polymer raw material (A2) | |
|---|---|
| Substance | Mixing ratio (weight parts) |
| Cyanoethylated/dihydroxypropylated polyvinyl alcohol | 0.625 |
| Methoxypolyethyleneglycol methacrylate (mol, wt. 468) | 3.125 |
| Trimethylolpropanetri methacrylate | 6.25 |
| Total | 10 |

**[Table 3]**

| Charging/discharging test results | | | | |
|---|---|---|---|---|
| No | Positive electrode | Negative electrode | Electrolyt e | Charging/discharging test result |
| 1 | Example 1 | Example 5 | AP1 | Possible |
| 2 | Example 1 | Example 5 | AP2 | Possible |
| 3 | Example 1 | Example 5 | AP3 | Possible |
| 4 | Example 1 | Example 5 | AP4 | Possible |
| 5 | Example 1 | Example 5 | PG1 | Possible |
| 6 | Example 1 | Example 5 | PG2 | Possible |
| 7 | Example 1 | Example 5 | L1 | Possible |
| 8 | Example 2 | Example 5 | AP3 | Possible |
| 9 | Example 2 | Example 6 | PG2 | Possible |
| 10 | Example 4 | Example 5 | AP3 | Possible |
| 11 | Example 4 | Example 6 | PG2 | Possible |
| 12 | Comparative example 1 | Comparative example 2 | AP1 | Charging/discharging impossible |
| 13 | Comparative example 1 | Comparative example 2 | AP2 | Charging/discharging impossible |
| 14 | Comparative example 1 | Comparative example 2 | AP3 | Charging/discharging impossible |
| 15 | Comparative example 1 | Comparative example 2 | AP4 | Charging/discharging impossible |
| 16 | Comparative example 1 | Comparative example 2 | PG1 | Charging/discharging impossible |
| 17 | Comparative example 1 | Comparative example 2 | PG2 | Charging/discharging impossible |
| 18 | Comparative example 1 | Comparative example 2 | L1 | Possible |

**[Table 4]**

| Electrolyte used in test | | | |
|---|---|---|---|
| Symbol | Type | Composition | Thickness |
| AP1 | All polymer | Cyanoethylated/dihydroxypropylated cellulose (e.g. Japanese Patent Application Laid-Open No. 8-225626) | 100 µm |
| AP2 | All polymer | Cyanoethylated/dihydroxypropylated cellulose and methacryl polymer 3D cross-linked structure (e.g. Japanese Patent Application Laid-Open No. 8-225626) | 100 µm |
| AP3 | All polymer | High viscosity polyurethane electrolyte (e.g. Japanese Patent Application No. 11-78085) | 100 µm |
| AP4 | All polymer | Cyanoethylated/dihydroxypropylated polyvinyl alcohol (e.g. Japanese Patent Application No. 11-78086) | 100 µm |
| PG1 | Polymer gel | Cyanoethylated/dihydroxypropylated polyvinyl alcohol and methacryl polymer 3D cross-linked structure containing 50% ethylene carbonate (EC)/diethylene carbonate (DEC) = (1/1) vol liquid electrolyte (e.g. Japanese Patent Application No. 11-78087) | 100 µm |
| PG2 | Polymer gel | High viscosity polyurethane electrolyte containing 50% ethylene carbonate (EC)/diethylene carbonate (DEC) = (1/1) vol liquid electrolyte (e.g. Japanese Patent Application No. 11-78085) | 100 µm |
| L1 | Liquid | Impregnation of ethylene carbonate (EC)/diethylene carbonate (DEC) = (1/1) vol solution in polyethylene separator | 23 µm |

## Claims

1. An electrode structure for electrical components in which ions migrate between electrodes, wherein a powdered electrode active substance or a powdered large surface material coated by an ion-conducting polymer, is made to adhere to a current-collecting member.

2. An electrode structure as defined in Claim 1, wherein a powdered electrically-conducting substance or a powdered large surface material is mixed with the powdered electrode active substance coated by the ion- conducting polymer and made to adhere to the current-collecting member.

3. A secondary cell comprising:
a positive electrode structure and a negative electrode structure comprising a current-collecting member to which a powdered electrode active substance coated by an ion-conducting polymer is made to adhere, and
an ion-conducting substance disposed between the positive electrode structure and the negative electrode structure.

4. A secondary cell as defined in Claim 3, wherein:
the ion-conducting substance is an ion-conducting polymer.

5. A secondary cell as defined in Claim 3, wherein:
the ion-conducting substance is an electrolyte, and a separator is disposed in this electrolyte.

6. A method of manufacturing an electrode structure for electrical components in which ions migrate between electrodes, wherein the electrode structure is formed by press-sliding a mixture of at least an ion-conducting polymer or ion-conducting polymer raw material with a powdered electrode active substance or a powdered large surface material so as to coat the powdered electrode active substance with the ion-conducting polymer, and applying the product to a current-collecting member.

7. A method of manufacturing an electrode structure as defined in Claim 6, wherein:
the electrode structure is manufactured by press-sliding a mixture and a solvent to make a paste.

8. A method of manufacturing a secondary cell wherein ions migrate between electrodes, wherein:
an ion-conducting substance is disposed between a positive electrode structure and a negative electrode structure formed by press-sliding at least a mixture of an ion-conducting polymer and a powdered electrode active substance so as to coat the powdered electrode active substance with the ion-conducting polymer, and applying the product to a current-collecting member.

9. A method of manufacturing a secondary cell as defined in Claim 8, wherein:
the ion-conducting substance is an ion-conducting polymer.

10. A method of manufacturing a secondary cell as defined in Claim 8, wherein:
the ion-conducting substance is an electrolyte, and a separator is disposed in this electrolyte.

11. An electric double layer capacitor comprising an electrode structure where a powdered large surface material coated by an ion-conducting polymer is made to adhere to a current-collecting member and an ion-conducting substance disposed between electrodes.

12. An electric double layer capacitor as defined in Claim 11, wherein:
said ion-conducting substance is an electrolyte, and a separator is positioned in said electrolyte.

13. An electric double layer capacitor as defined in claim 11, wherein:
said ion-conducting substance is an ion-conducting polymer.
